# EUROPÄISCHE PATENTSCHRIFT

(11) **EP 1 020 751 B1**
(45) Veröffentlichungstag und Bekanntmachung des Hinweises auf die Patenterteilung: **11.02.2004**
(21) Anmeldenummer: 99124698.4
(22) Anmeldetag: 11.12.1999
(51) Int. Cl.: G02B 7/02

(54) **Optische Abbildungsvorrichtung, insbesondere Objektiv, mit wenigstens einem optischen Element**
Optical imaging device, especially lens, with at least one optical element
Dispositif d'imagerie optique, en particulier objectif, avec au moins un élement optique

(30) Priorität: 15.01.1999 DE 19901295
(43) Veröffentlichungstag der Anmeldung: 19.07.2000
(73) Patentinhaber: Carl Zeiss SMT AG, 73447 Oberkochen (DE)
(72) Erfinder: Trunz, Michael, 73479 Pfahlheim (DE); Hilgers, Ralf, 71554 Weissach im Tal (DE); Mühlbeyer, Michael, 73430 Aalen (DE); Merz, Erich, 73457 Essingen (DE)
(74) Vertreter: Müller-Rissmann, Werner Albrecht, Dr.

(56) Entgegenhaltungen:
- EP-A- 0 243 893
- US-A- 4 929 073
- US-A- 5 117 311
- US-A- 5 160 112
- US-A- 5 428 482
- US-A- 5 523 893
- US-A- 5 638 223
- US-A- 5 822 133

## Beschreibung

Die Erfindung betrifft eine optische Abbildungsvorrichtung, insbesondere Objektiv, mit wenigstens einem optischen Element, das in einem Innenring gelagert ist, wobei der Innenring mit einer Außenfassung verbunden ist, und mit einer Manipulatoreinrichtung zur Verschiebung des optischen Elementes in wenigstens eine Richtung, die senkrecht zur optischen Achse liegt.

Aus der EP 243 893 B1 ist eine Linsenfassung bekannt mit einer Linse als optischem Element, welche elastisch mit einem Fassungselement derart verbunden ist, daß aufgrund von Temperaturdifferenzen bzw. Temperaturschwankungen auftretende unterschiedliche Dehnungen der einzelnen Elemente ausgeglichen werden können. Insbesondere werden dabei Radialbewegungen bzw. Radialdehnungen ausgeglichen, wobei jedoch eine zentrische Lage beibehalten werden soll.

Die US-PS 5,428,482 zeigt eine Deformationsentkoppelung einer Linse von einer Fassung.

Aus der US 5,638,223 ist ein Objektiv bekannt, bei welchem Linsenkippungen möglich sind.

Beim Zusammenbau einer optischen Abbildungsvorrichtung, z.B. eines Objektivs, welches aus einer Vielzahl von Teilen und mehreren optischen Elementen besteht, treten zwangsläufig mechanische Fertigungstoleranzen auf. Beim Zusammenbau addieren sich diese Toleranzen, wie z.B. Unebenheiten der Einzelteile. Insbesondere besteht die Gefahr von größeren Unebenheiten am Sitz des optischen Elements, wie z.B. einer Linse.

Zum Ausgleich dieser Fertigungstoleranzen ist es bekannt, ein oder mehrere optische Elemente auf der x- oder der y-Achse, d.h. auf einer oder beiden Achsen senkrecht zur optischen Achse, zu verfahren. Bekannte Manipulatoreinrichtungen zur Verschiebung des optischen Elementes bestehen dabei im allgemeinen aus einer Außenfassung, einem Manipulatorring und einer Innenfassung bzw. einem Innenring, der das optische Element trägt.

Der vorliegenden Erfindung liegt daher die Aufgabe zugrunde, eine optische Abbildungsvorrichtung der eingangs erwähnten Art derart zu verbessern, daß zum Ausgleich von Bildfehlern ein optisches Element in einer definierten Weise derart in mindestens einer senkrecht oder einem beliebigen Winkel zur optischen Achse liegenden Achse verschiebbar ist, daß die weggesteuerte Verschiebung mit einer Kraftfluß- und Steifigkeitsoptimierten Konstruktion sehr genau mit einer deutlichen Reduzierung der Oberflächendeformation am optischen Element durchgeführt werden kann.

Erfindungsgemäß wird diese Aufgabe durch die im kennzeichnenden Teil von Anspruch 1 genannten Merkmale gelöst.

Durch die erfindungsgemäße Lösung findet praktisch eine Integration der bisherigen drei Bauteile, nämlich Außenfassung, Innenring und Manipulatorring, zu einem einheitlichen Bauteil statt, insbesondere wenn Innenring und Außenfassung einstückig sind. Als wesentliche Vorteile ergeben sich damit Gewichtseinsparungen und ein kleinerer Bauraum, wodurch sich auch höhere Eigenfrequenzen ergeben.

Durch die Teilereduktion ergeben sich zum einen Einsparkosten und zum anderen auch eine entsprechende Zeitersparnis bei der Montage. Darüber hinaus stellt sich auf diese Weise eine bessere Steifigkeitsgestaltung ein, verbunden mit einer Reduktion der Oberflächendeformation am optischen Element. Außerdem lassen sich auf diese Weise die Toleranzen, insbesondere Flächentcleranzen reduzieren.

Mit der erfindungsgemäßen Abbildungsvorrichtung lassen sich auch ganz allgemein Korrekturen von Bildfehlern des Objektives insgesamt vornehmen, um dieses entsprechend exakt auszurichten.

Durch die Verbindungsglieder, über welche eine elastische bzw. nachgiebige Verbindung zwischen der Außenfassung und dem Innenring geschaffen wird, wird eine Nachgiebigkeit bzw. Verschiebemöglichkeit in x- und y-Richtung erreicht, wobei gleichzeitig jedoch eine Steifigkeit in z-Richtung, d.h. in Richtung der optischen Achse, gegeben ist.

Vorteilhafte Ausgestaltungen und Weiterbildungen ergeben sich aus den Unteransprüchen und aus dem nachfolgend anhand der schematischen Zeichnungen prinzipmäßig beschriebenen Ausführungsbeispiel.

Es zeigt:
- Figur 1: als optische Abbildungsvorrichtung ein optisches Element eines Objektives mit der erfindungsgemäßen Lagerung in der Draufsicht;
- Figur 2: eine Ausschnittsvergrößerung der Fig. 1 mit einem L-förmigen Verbindungsgelenk zwischen Innenring und Außenfassung;
- Figur 3: eine Ausschnittsvergrößerung der Fig. 1 mit einem Drehgelenk zwischen dem Innenring und der Außenfassung; und
- Figur 4: eine Ausschnittsvergrößerung der Fig. 1 eines Verstellhebels zur Verschiebung des Innenringes mit dem optischen Element gegenüber der Außenfassung.

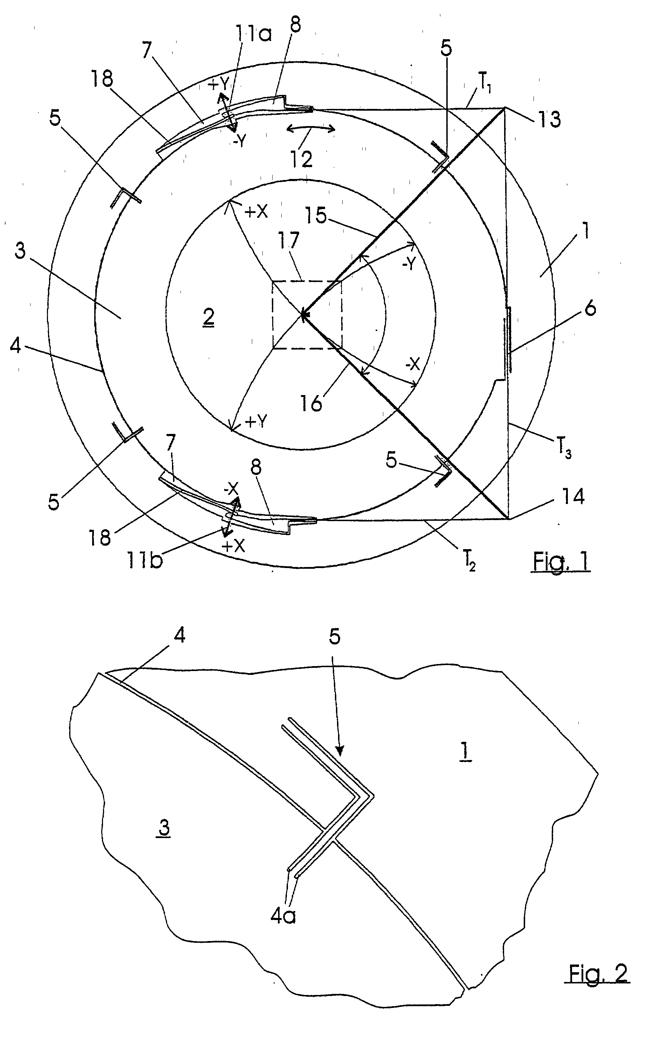

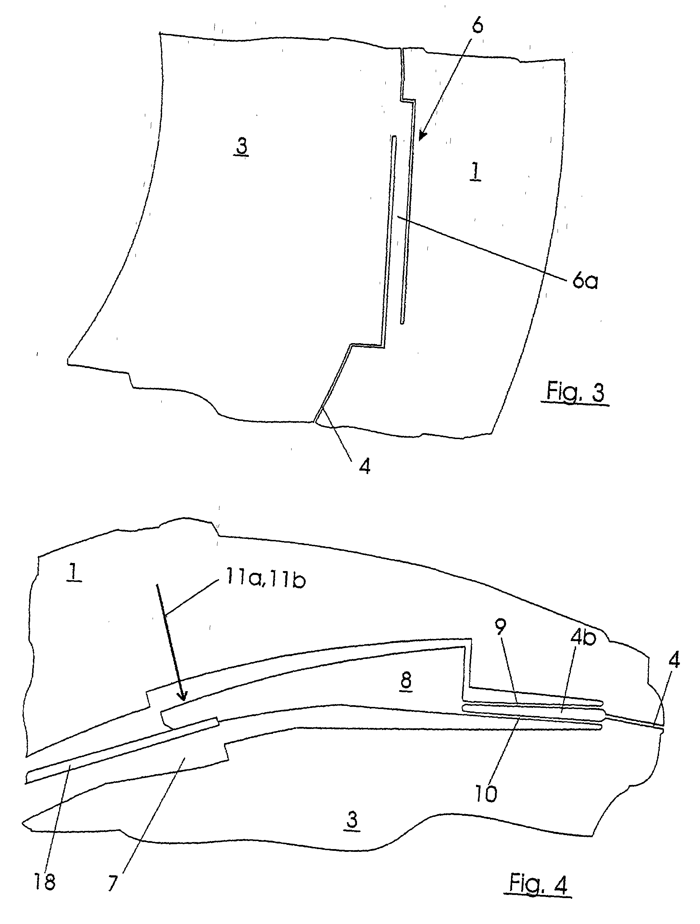

Die Fig. 1 zeigt in der Draufsicht eine Außenfassung 1 einer optischen Abbildungsvorrichtung, z.B. eines Objektives, mit einer Linse 2 als optischem Element, das von einem Innenring 3 über Laschen getragen ist. Die Außenfassung 1 und der Innenring 3 sind einstückig ausgebildet, wobei über ein System von Umfangsschlitzen 4 zwischen dem Innenring 3 und der Außenfassung 1 mit dazwischenliegenden Verbindungsgliedern 5 in L-Form eine nachgiebige Verbindung zwischen dem Innenring 3 und der Außenfassung 1 geschaffen, wird. Die Verbindungsglieder 5 in L-Form sind als Festkörpergelenke ausgebildet und durch Erodieren in den Innenring 3 und die Außenfassung 1 eingebracht. Die Verbindungsglieder 5 in L-Form, deren Ausgestaltung aus der Fig. 2 deutlich ersichtlich ist, stellen neben einem Drehgelenk '6 und Verstellhebeln 8, 9, 10 die einzige Verbindung zwischen dem Innenring 3 und der Außenfassung 1 dar. Die Umfangsschlitze 4, welche durch Trennschnitte in die einstückige Grundform eingebracht sind, werden in regelmäßigen Abständen durch zwei mit geringem Abstand nebeneinander angeordneten Trennschnitte 4a in L-Form unterbrochen, wodurch die Verbindungsglieder 5 in Form von Stegen zwischen den L-Form-Schnitten gebildet werden. In der vergrößerten Darstellung des Drehgelenks 6 in Fig. 3 ist erkennbar, daß das Drehgelenk 6 ebenfalls durch einen Versatz und eine Überlappung der Umfangsschlitze 4 gebildet wird, wobei das Drehgelenk 6 durch einen Steg 6a zwischen den sich in diesem Bereich überlappenden Umfangsschlitze 4 gebildet wird. Statt einer Einstückigkeit von Innenring 3 und Außenfassung 1 kann die Verbindung auch über Festkörpergelenke in Form von eingeschweißten, geklebten oder gelöteten Bauteilen erfolgen.

An zwei gegenüberliegenden Stellen sind die Umfangsschlitze 4 unter Bildung einer größeren Aussparung 7 zwischen der Außenfassung 1 und dem Innenring 3 unterbrochen. In den beiden Aussparungen 7 ist jeweils ein Verstellhebel 8 angeordnet (siehe insgesamt vergrößerte Darstellung in der Fig. 4), der über einen Hebelarm 9 mit der Außenfassung 1 und einen weiteren Hebelarm 10 mit dem Innenring 3 verbunden ist und damit ein Verstellgelenk bildet. Die beiden Hebelarme 9 und 10 erzeugen zwischen sich in Verlängerung eines Umfangsschlitzes 4 einen Schlitz 4b. An dem von den beiden Hebelarmen 9 und 10 abgewandten Ende jedes Verstellhebels 8 greift in radialer Richtung eine nur durch einen Pfeil 11a bzw. 11b dargestellte Verstellschraube als Verstellglied an, die eine Manipulatoreinrichtung zur Verschiebung des Innenrings 3 gegenüber der Außenfassung 1 bildet. Hierzu ist die Schraube 11a bzw. 11b in eine Gewindebohrung der Außenfassung 1 eingesetzt. Wird die Schraube 11a bzw. 11b verstellt, so ergibt sich über den Hebelarm 10 eine Verschiebung des Innenrings 3 in Pfeilrichtung 12 gegenüber der Außenfassung 1. Die Manipulatoreinrichtung ist als Kraftflußund Sicherheitsoptimierte Konstruktion ausgebildet.

Um nun eine gewünschte'und vorbestimmte Verschiebung des Innenringes 3 gegenüber der Außenfassung 1 in der x-/y-Ebene zu erreichen, sind die nachfolgenden Bedingungen bzw. Zuordnungen einzuhalten:

Das Drehgelenk 6 ist derart zwischen den beiden Angriffspunkten der Verstellhebel 8 zur Verschiebung des Innenringes 3 anzuordnen, daß sich die Tangenten T₁ und T₂ an die Angriffspunkte der Verstellhebel 8 mit der an das Drehgelenk 6 angelegten Tangente T₃ schneiden. Die beiden Schnittpunkte bilden dabei zum Einen einen Drehpol 13 für die Schraube 11b zur Verschiebung des Innenringes 3 in x-Richtung und zum anderen einen Drehpol 14 zur Verschiebung des Innenringes 3 in y-Richtung durch die Schraube 11a. Gleichzeitig ist dabei dafür zu sorgen, daß die beiden Radialen 15 und 16 vom Drehpol 13 bzw. Drehpol 14 zum Mittelpunkt bzw. zur z-Achse senkrecht aufeinander stehen. Die beiden Radialen 15 und 16 bilden somit die beiden Achsen, wobei die Radiale 16 die x-Achse und die Radial 15 die y-Achse definiert.

Bei einer Verstellung der x-Verstellschraube 11b dreht sich somit der Innenring 3 um den Drehpol 13, bei einer Verstellung der y-Verstellschraube 11a dreht sich der Innenring 3 um den Drehpol 14. Dies bedeutet, daß sich genaugenommen keine lineare x- bzw. y-Bewegung ergeben würde, aber da die Radien der Radialen 15 und 16 wesentlich größer sind als die vorgesehene Verstellbewegung, ergibt sich in einem Verfahrfeld 17 (siehe gestrichelte Darstellung in Fig. 1) eine quasi lineare Bewegung in der x-y-Ebene. Zur Rückstellung von Verstellbewegungen über die Verstellhebel 8 und zur Erhöhung der Steifigkeiten für Zusatz- und Sonderlasten können gegebenenfalls jeweils am Innenumfang der Verstellhebel 8 angreifende Blattfedern 18 angreifen, die sich mit ihren anderen Enden an der Außenfassung 1 abstützen. Die Verschiebebewegung in Bewegungsrichtung 12 des Innenringes 3 ergibt sich dadurch, daß bei Erzeugung einer Radialkraft auf den Verstellhebel 8 durch die Verstellschraube 11a bzw. 11b der äußere Hebelarm 9 gelangt und der innere Hebelarm 10 zusammengedrückt wird, woraus die Bewegung des Innenringes wenigstens annähernd in Umfangsrichtung erfolgt. Die Hebelarme 9 und 10 wirken als (Hebel)-Getriebe.

Durch die Anordnung und Ausgestaltung der Umfangsschlitze 4 und der Verbindungsglieder 5 ergibt sich eine hohe Elastizität in der Ebene senkrecht zur optischen Achse (z-Achse). Darüber hinaus ist eine hohe Steifigkeit in z-Richtung gegeben. Dies beruht unter anderem auf der L-Form der Verbindungsglieder 5, welche in z-Richtung eine entsprechende Länge besitzen können und dementsprechend eine hohe Steifigkeit in z-Richtung gewährleisten. Ebenso wie die Verbindungsglieder 5 stellt das Drehgelenk 6 bei dem Ausführungsbeispiel ein Festkörpergelenk dar. Selbstverständlich sind jedoch auch noch andere Gelenkarten zur Realisierung einer Verschiebung des Innenringes 3 gegenüber der Außenfassung 1 möglich.

Falls keine rechtwinklige Verfahrbarkeit gewünscht wird, können die vorstehend genannten Zuordnungen der Drehpole 13, 14 und des Drehgelenkes 6 auch anders getroffen werden.

Durch die Länge und Winkelanordnung der Hebel 9 und 10 kann das Übersetzungsverhältnis eingestellt werden.

### Bezugszeichenliste

- 1: Außenfassung
- 2: optisches Element
- 3: Innenring
- 4: Umfangsschlitze
- 4a: (Erodierschnitte)
- 4b: Umfangsschlitze
- 5: Verbindungsglieder
- 6: Drehgelenk
- 6a: Steg
- 7: Aussparung
- 8: Verstellhebel
- 9: Hebelarm
- 10: Hebelarm
- 11a: Pfeil (Verstellschraube/y-Schraube)
- 11b: Pfeil (Verstellschraube/x-Schraube)
- 12: Bewegungsrichtung
- 13: Drehpol
- 14: Drehpol
- 15: Radiale
- 16: Radiale
- 17: Verfahrfeld
- 18: Blattfedern

- T₁: Tangente
- T₂: Tangente
- T₃: Tangente

## Patentansprüche

1. Optische Abbildungsvorrichtung, insbesondere Objektiv, mit wenigstens einem optischen Element (2), das in einem Innenring (3) gelagert ist, wobei der Innenring (3) mit einer Außenfassung (1) verbunden ist, und mit einer Manipulatoreinrichtung zur weggesteuerten Verschiebung des optischen Elementes (2) in wenigstens eine Richtung, die senkrecht oder in einem beliebigen Winkel ungleich Null zur optischen Achse liegt, **dadurch gekennzeichnet, daß** über ein System von Umfangsschlitzen (4) zwischen dem Innenring (3) und der Außenfassung (1) mit dazwischenliegenden Verbindungsgliedern (5), einem Drehgelenk (6) zwischen dem Innenring (3) und der Außenfassung (1) und wenigstens einem Verstellgelenk (8,9,10) mit einem Verstellglied (11a,11b) zwischen Innenring (3) und Außenfassung (1) als Manipulatoreinrichtung eine deformationsarme oder deformationsgesteuerte Verschiebung des optischen Elementes (2) erreicht wird.

2. Optische Abbildungsvorrichtung nach Anspruch 1, **dadurch gekennzeichnet, daß** der Innenring (3) und die Außenfassung (1) einstückig ausgebildet sind.

3. Optische Abbildungsvorrichtung nach Anspruch 1 oder 2, **dadurch gekennzeichnet, daß** zur Verschiebung in zwei senkrecht zueinander liegenden Achsen (x- und y-Achse) zwei Verstellgelenke mit Verstellhebeln (8) vorgesehen sind, die jeweils Drehpole (13,14) besitzen, welche durch Schnittpunkte von Tangenten (T₁,T₂) an das jeweilige Verstellgelenk (8,9,10) mit der Tangente (T₃) an das dazwischenliegende Drehgelenk (6) gebildet sind.

4. Optische Abbildungsvorrichtung nach Anspruch 3, **dadurch gekennzeichnet, daß** die Radialen (15,16) von den Drehpolen (13,14) zur z-Achse senkrecht oder in einem beliebigen Winkel zur optischen Achse aufeinander stehen.

5. Optische Abbildungsvorrichtung nach einem der Ansprüche 1 bis 4, **dadurch gekennzeichnet, daß** die Verbindungsglieder (5) durch Trennschnitte mit dazwischenliegenden Stegen gebildet sind, wobei die Verbindungsglieder (5) über den Umfang verteilt zwischen dem Innenring (3) und der Außenfassung (1) angeordnet sind.

6. Optische Abbildungsvorrichtung nach einem der Ansprüche 1 bis 5, **dadurch gekennzeichnet, daß** die Manipulatoreinrichtung Verstellschrauben (11a,11b) als Verstellglieder aufweist, die an den Verstellhebeln (8) angreifen.

7. Optische Abbildungsvorrichtung nach Anspruch 6, **dadurch gekennzeichnet, daß** die Verstellhebel (8) jeweils an einem Ende mit zwei Hebelarmen (9,10) versehen sind, wobei der Hebelarm (9) mit der Außenfassung (1) und der Hebelarm (10) mit dem Innenring (3) unter Bildung eines dazwischenliegenden Schlitzes (4b) verbunden ist und wobei an dem von den beiden Hebelarmen (9,10) abgewandten Ende jeweils die Verstellschraube (11a,11b) in radialer Richtung an dem dazugehörigen Verstellhebel (8) angreift.

8. Optische Abbildungsvorrichtung nach Anspruch 7, **dadurch gekennzeichnet, daß** der Schlitz (4b) zwischen den beiden Hebelarmen (9,10) eine Verlängerung eines Umfangsschlitzes (4) bildet.

9. Optische Abbildungsvorrichtung nach einem der Ansprüche 1 bis 8, **dadurch gekennzeichnet, daß** die Verbindungsglieder (5) und/oder das Drehgelenk (6) als Festkörpergelenke ausgebildet sind.

10. Optische Abbildungsvorrichtung nach einem der Ansprüche 1 bis 8, **dadurch gekennzeichnet, daß** die Verbindungsglieder (5) durch separate Bauteile gebildet sind.

11. Optische Abbildungsvorrichtung nach einem der Ansprüche 1 bis 10, **dadurch gekennzeichnet, daß** die Verstellhebel (8) mit Rückstellgliedern (Blattfedern 18) versehen sind.

## Claims

1. Optical imaging device, especially an objective, with at least one optical element (2) which is mounted in an inner ring (3), the inner ring (3) being connected to an outer mount (1), and with a manipulator device for displacing the optical element (2) along a controlled path in at least one direction which is perpendicular or at an arbitrary angle other than zero to the optical axis, **characterized in that** a deformation-free or deformation-controlled displacement of the optical element (2) is achieved via a manipulator device which is a system composed of circumferential slots (4) between the inner ring (3) and the outer mount (1) with connecting members (5) situated therebetween, of a swivel joint (6) between the inner ring (3) and the outer mount (1), and of at least one adjusting joint (8, 9, 10) with an adjusting member (11a, 11b) between the inner ring (3) and outer mount (1).

2. Optical imaging device according to Claim 1, **characterized in that** the inner ring (3) and the outer mount (1) are constructed in one piece.

3. Optical imaging device according to Claim 1 or 2, **characterized in that** provided for the purpose of displacement along two mutually perpendicular axes (x-and y-axis) are two adjusting joints with adjusting levers (8) which in each case have centres of rotation (13, 14) which are formed by points of dissection of tangents (T₁, T₂) with the respective adjusting joint (8, 9, 10) with the tangent (T₃) to the swivel joint (6) situated therebetween.

4. Optical imaging device according to Claim 3, **characterized in that** the radials (15, 16) from the centres of rotation (13, 14) to the z-axis are perpendicular to one another or at an arbitrary angle to the optical axis.

5. Optical imaging device according to one of Claims 1 to 4, **characterized in that** the connecting members (5) are formed by parting cuts with interposed webs, the connecting members (5) being arranged distributed over the circumference between the inner ring (3) and the outer mount (1).

6. Optical imaging device according to one of Claims 1 to 5, **characterized in that** the manipulator device has setting screws (11a, 11b) as adjusting members which act on the adjusting levers (8).

7. Optical imaging device according to Claim 6, **characterized in that** the adjusting levers (8) are each provided at one end with two lever arms (9, 10), the lever arm (9) being connected to the outer mount (1), and the lever arm (10) being connected to the inner ring (3) with the formation of an interposed slot (4b), and the setting screw (11a, 11b) respectively acting in a radial direction on the associated adjusting lever (8) at the end averted from the two lever arms (9, 10).

8. Optical imaging device according to Claim 7, **characterized in that** the slot (4b) between the two lever arms (9, 10) forms an extension of a circumferential slot (4).

9. Optical imaging device according to one of Claims 1 to 8, **characterized in that** the connecting members (5) and/or the swivel joint (6) are/is constructed as solid joint(s).

10. Optical imaging device according to one of Claims 1 to 8, **characterized in that** the connecting members (5) are formed by separate components.

11. Optical imaging device according to one of Claims 1 to 10, **characterized in that** the adjusting levers (8) are provided with restoring members (leaf springs 18).

## Revendications

1. Dispositif d'imagerie optique, en particulier un objectif, avec au moins un élément optique (2) qui est positionné dans une bague intérieure (3) raccordée à un support extérieur (1), et avec un organe de manipulation destiné à déplacer avec réglage de course l'élément optique (2) dans au moins une direction qui est perpendiculaire ou qui se trouve à un angle quelconque différent de zéro par rapport à l'axe optique, **caractérisé en ce que** l'on obtient un déplacement sans déformation ou à déformation contrôlée de l'élément optique (2) par l'intermédiaire d'un système de fentes circonférentielles (4) entre la bague intérieure (3) et le support extérieur (1), comportant des éléments de liaison (5) situés entre ceux-ci, un joint rotatif (6) entre la bague intérieure (3) et le support extérieur (1) et au moins une articulation de réglage (8,9,10) avec un élément de réglage (11a, 11b) entre la bague intérieure (3) et le support extérieur (1) en tant qu'organe de manipulation.

2. Dispositif d'imagerie optique selon la revendication 1, **caractérisé en ce que** la bague intérieure (3) et le support extérieur (1) sont conçus en une seule pièce.

3. Dispositif d'imagerie optique selon la revendication 1 ou 2, **caractérisé en ce que** pour le déplacement selon deux axes situés perpendiculairement l'un à l'autre (axe x et axe y) sont prévues deux articulations de réglage avec leviers de réglage (8), qui présentent respectivement des tripôles (13,14), lesquels sont formés par les points d'intersection des tangentes (T₁, T₂) à l'articulation de réglage respective (8,9,10) avec la tangente (T₃) au joint rotatif (6) situé entre lesdites articulations de réglage.

4. Dispositif d'imagerie optique selon la revendication 3, **caractérisé en ce que** les radiales (15,16) des tripôles (13,14) se situent l'une sur l'autre perpendiculairement à l'axe z ou à un angle quelconque par rapport à l'axe optique.

5. Dispositif d'imagerie optique selon l'une quelconque des revendications 1 à 4, **caractérisé en ce que** les éléments de liaison (5) sont formés par des coupes de séparation avec des entretoises situées entre celles-ci, les éléments de liaison (5) étant disposés par répartition sur la circonférence entre la bague intérieure (3) et le support extérieur (1).

6. Dispositif d'imagerie optique selon l'une quelconque des revendications 1 à 5, **caractérisé en ce que** l'organe de manipulation présente des vis de réglage (11a,11b) comme éléments de réglage, qui s'appliquent sur les leviers de réglage (8).

7. Dispositif d'imagerie optique selon la revendication 6, **caractérisé en ce que** les leviers de réglage (8) sont chacun munis de deux bras de levier (9,10) à une extrémité, le bras de levier (9) et le bras de levier (10) étant respectivement raccordés au support extérieur (1) et à la bague intérieure (3) avec formation d'une fente (4b) située entre eux et chaque vis de réglage (11a,11b) s'appliquant dans le sens radial sur le levier de réglage y associé à son extrémité tournée vers le côté opposé aux deux bras de levier (9,10).

8. Dispositif d'imagerie optique selon la revendication 7, **caractérisé en ce que** la fente (4b) forme entre les deux bras de levier (9,10) un prolongement d'une fente circonférentielle (4).

9. Dispositif d'imagerie optique selon l'une quelconque des revendications 1 à 8, **caractérisé en ce que** les éléments de liaison (5) et/ou le joint rotatif (6) sont conçus en tant qu'articulations à corps solide.

10. Dispositif d'imagerie optique selon l'une quelconque des revendications 1 à 8, **caractérisé en ce que** les éléments de liaison (5) sont formés par des composants séparés.

11. Dispositif d'imagerie optique selon l'une quelconque des revendications 1 à 10, **caractérisé en ce que** les leviers de réglage (8) sont munis d'éléments de rappel (ressorts à lames 18).
